# FASCICULE DE BREVET EUROPEEN

(11) **EP 3 793 220 B1**
(45) Date de publication et mention de la délivrance du brevet: **10.04.2024**
(21) Numéro de dépôt: 19306092.8
(22) Date de dépôt: 10.09.2019
(51) Int. Cl.: G09B 21/00, A61H 3/06, H04R 27/00

(54) **SYSTÈME DE DIFFUSION SONORE EMBARQUÉ DANS UN VÉHICULE FERROVIAIRE, VÉHICULE, PROCÉDÉ ET PROGRAMME D'ORDINATEUR ASSOCIÉS**
SCHALLAUSSTRAHLUNGSSYSTEM AN BORD EINES SCHIENENFAHRZEUGS SOWIE SCHIENENFAHRZEUG, VERFAHREN UND COMPUTERPROGRAMM
SOUND DIFFUSION SYSTEM EMBEDDED IN A RAILWAY VEHICLE AND ASSOCIATED VEHICLE, METHOD AND COMPUTER PROGRAM

(43) Date de publication de la demande: 17.03.2021
(73) Titulaire: SpeedInnov, 75008 Paris (FR)
(72) Inventeur: DELAPORTE, Matthieu, 17440 AYTRE (FR); LEMAITRE, Bruno, 17138 PUILBOREAU (FR)
(74) Mandataire: Lavoix

(56) Documents cités:
- WO-A1-2006/095415
- FR-A1- 2 971 353

## Description

La présente invention concerne un véhicule ferroviaire.

La présente invention concerne également un procédé de diffusion de signaux sonores dans un véhicule ferroviaire.

La présente invention concerne enfin un programme d'ordinateur.

WO 2006/095415 divulgue un système de diffusion sonore dans un véhicule ferroviaire configuré pour diffuser des publicités.Il est connu d'afficher le numéro du véhicule ferroviaire et sa destination en tête de quai et d'afficher le numéro de chaque voiture à côté des portes de celle-ci afin que les voyageurs puissent trouver aisément leur place attribuée dans le véhicule ferroviaire.

Toutefois, ce mode de communication avec les voyageurs ne donne pas entière satisfaction, en particulier pour les personnes malvoyantes qui ne peuvent pas avoir accès à ces informations.

FR 2971353A1 décrit un exemple de dispositif répétiteur sonore de repérage d'une porte d'accès d'un véhicule de transport en commun. Le dispositif comprend un haut-parleur, disposé au-dessus de la porte d'accès, une unité centrale propre à envoyer des commandes au haut-parleur et un récepteur d'ondes propre à recevoir un signal d'une télécommande actionnée par une personne malvoyante.

Un objectif de l'invention est ainsi de proposer un système d'information pour les voyageurs permettant une communication améliorée avec les voyageurs, particulièrement avec les personnes malvoyantes.

A cet effet, l'invention a pour objet un véhicule ferroviaire selon la revendication 1.

Selon des modes de réalisation particuliers de l'invention, le véhicule présente également une ou plusieurs des caractéristiques des revendications 2 à 4.

L'invention a également pour objet un procédé de diffusion de signaux sonores, selon la revendication 5.

L'invention a également pour objet un programme d'ordinateur selon la revendication 6.

L'invention et ses avantages seront mieux compris à la lecture de la description qui va suivre, donnée uniquement à titre d'exemple non limitatif, et faite en référence aux dessins annexés, sur lesquels :
- [Fig 1] la figure 1 est une représentation schématique de côté d'un véhicule ferroviaire selon l'invention ; et
- [Fig 2] la figure 2 est une représentation schématique d'un système de diffusion sonore embarqué dans le véhicule ferroviaire de la figure 1.

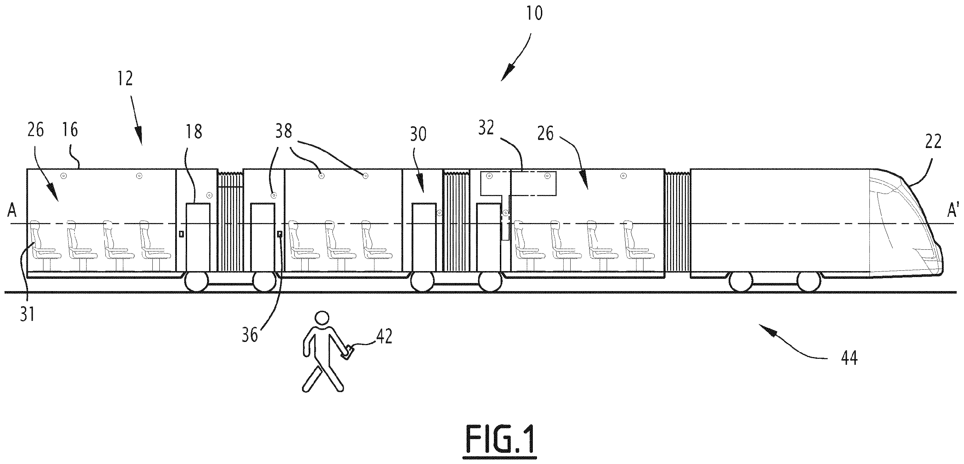

Un véhicule ferroviaire 10 configuré pour permettre le transport de voyageurs est représenté sur la figure 1.

Le véhicule ferroviaire 10 comporte une pluralité de voitures 12 de transport de voyageurs et un système de diffusion sonore 14 embarqué dans le véhicule 10.

Chaque voiture 12 possède une caisse 16 rigide délimitant un volume intérieur et au moins une porte d'accès 18 entre le volume intérieur et l'extérieur de la voiture 12. Chaque porte d'accès 18 est de préférence située sur une face latérale de la voiture 12.

Chaque voiture 12 s'étend suivant une direction longitudinale A-A' et possède deux extrémités longitudinales.

Le véhicule 10 comprend une pluralité de voitures 12 disposées à la file les unes derrières les autres. Chaque voiture 12 est alors liée à chaque autre voiture 12 adjacente par les extrémités longitudinales adjacentes de ces deux voitures 12.

Dans l'exemple illustré, le véhicule 10 comprend une voiture de tête 22 définissant une extrémité de tête du véhicule ferroviaire 10 et une pluralité de voitures 12.

La voiture de tête 22 est ici une voiture motrice ou locomotive, configurée pour fournir l'énergie motrice du véhicule 10, i.e. pour pousser ou tracter les voitures 12.

La voiture de tête 22 est ici dépourvue de compartiments voyageur et/ou de porte d'accès. En variante, la voiture de tête 22 pourrait être munie d'un compartiment voyageur, celui-ci étant accessible depuis la voiture 12 adjacent via une intercirculation ou par une porte 18 latérale prévue sur la voiture de tête 22.

Chaque voiture 12 délimite un compartiment voyageurs 26. Dans l'exemple illustré, chaque compartiment voyageurs 26 s'étend sur toute la longueur de la caisse 16.

Chaque voiture 12 possède en outre au moins une plateforme d'accès 30 située à l'une des extrémités de la voiture 12. Avantageusement, chaque voiture possède deux plateformes 30 situées aux deux extrémités de la voiture 12.

Le compartiment voyageur 26 comprend au moins un étage équipé d'une pluralité de sièges 31 pour les voyageurs.

Chaque plateforme 30 est reliée au tronçon central par une porte ou par un escalier lorsque la plateforme est située à une hauteur différente du ou des étages du tronçon central 28.

Chaque plateforme 30 est desservie par au moins l'une des portes d'accès 18, de préférence par deux portes d'accès 18 latérales, chaque porte d'accès 18 étant prévue sur une face latérale respective de la voiture 12.

Le système de diffusion sonore 14 est configuré pour diffuser des messages sonores aux passagers du véhicule 10.

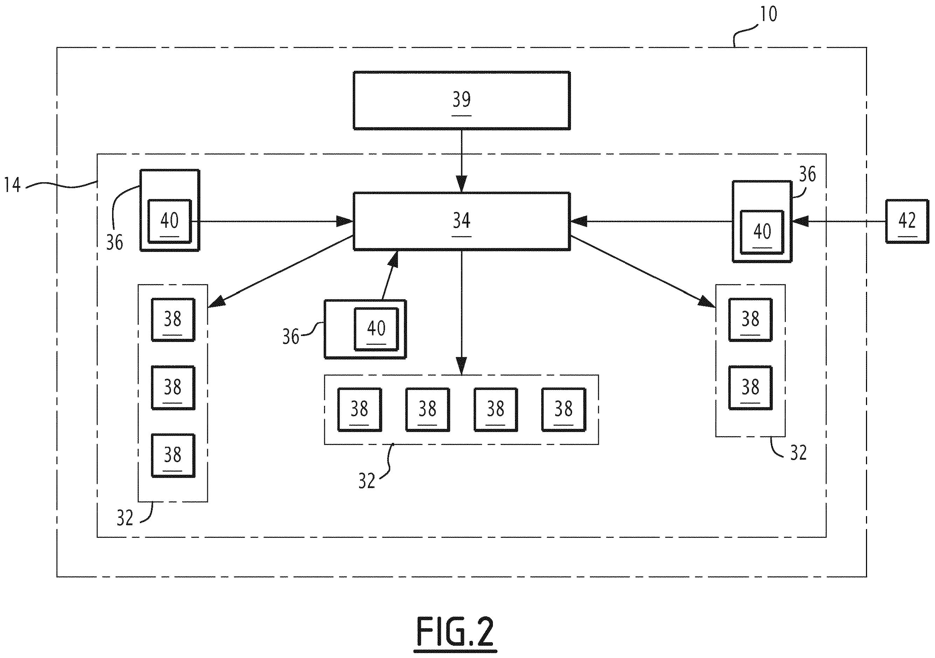

Comme visible sur les figures 1 et 2, le système de diffusion sonore 14 comprend une pluralité de groupes de haut-parleurs 32, un dispositif de contrôle 34 des haut-parleurs et au moins un dispositif de réception 36.

La pluralité de groupes de haut-parleurs 32 est répartie dans les voitures 12.

Chaque groupe de haut-parleurs 32 comprend au moins un haut-parleur 38 et est situé dans une zone de diffusion respective du véhicule ferroviaire 10, pour la diffusion de messages sonores dans cette zone de diffusion.

Avantageusement, chaque compartiment voyageurs 26 et chaque plateforme 30 comprend au moins un groupe de haut-parleurs 32.

Chaque haut-parleur 38 est un transducteur électroacoustique propre à diffuser un signal sonore à destination des passagers situés dans la zone de diffusion correspondante.

Le dispositif de contrôle 34 est configuré pour diffuser des signaux sonores via toutes les combinaisons possibles de groupes de haut-parleurs 32. Par exemple, le dispositif de contrôle 34 est propre à envoyer un signal sonore à l'ensemble des groupes de haut-parleurs 32, à un unique groupe de haut-parleurs 32 ou à une partie des groupes de haut-parleurs 32.

Avantageusement, le dispositif de contrôle 34 est propre à contrôler la puissance de diffusion de chaque groupe de haut-parleurs 32. Ainsi, chaque groupe de haut-parleurs 32 présente une puissance de diffusion propre des signaux sonores.

Le dispositif de contrôle 34 est configuré pour la diffusion de signaux sonores génériques via les haut-parleurs 38 des différents groupes de haut-parleurs 32.

Un signal sonore générique est un signal sonore qui est destiné à l'ensemble ou à une partie des passagers du véhicule 10 et qui est diffusé par tous les groupes de haut-parleurs ou au moins par plusieurs groupes de haut-parleurs.

Le signal sonore générique est par exemple un message sonore émis de la part du chauffeur du véhicule 10 ou d'un membre de l'équipage du véhicule 10 via un microphone relié au dispositif de contrôle 34 ou un message sonore généré automatiquement par le dispositif de contrôle 34 et comprenant au moins une information relative au véhicule ferroviaire 10 telle que le numéro du véhicule 10, la destination finale du véhicule 10, un message indiquant un départ ou une arrivée en gare imminente du véhicule 10 ou un message de sécurité à destination des passagers.

Avantageusement, chaque signal sonore est un signal numérique. La génération des messages par le dispositif de contrôle 34 est ainsi facilitée ainsi que l'intégration du dispositif de contrôle 34 dans la structure générale des différents systèmes du véhicule 10.

Avantageusement, le dispositif de contrôle 34 est configuré pour recevoir un signal audio généré par un système de contrôle et de gestion 39 du véhicule ferroviaire 10.

Le système de contrôle et de gestion de train 36 est propre à contrôler et à faire communiquer les différents systèmes du véhicule 10. Le système de contrôle et de gestion de tain 36 est bien connu de l'homme du métier sous le nom de TCMS pour « *Train Control and Management System* » en anglais.

Le signal audio est par exemple un message comportant des informations sur le véhicule 10, un message indiquant un départ ou une arrivée en gare imminente du véhicule 10 ou un message de sécurité à destination des passagers.

Le dispositif de contrôle 34 est configuré pour transmettre le signal audio à au moins un des groupes de haut-parleurs 32 pour la diffusion d'un signal sonore correspondant.

Le dispositif de contrôle 34 est, en outre, propre à gérer la priorité des signaux sonores. En particulier, le dispositif de contrôle 34 est configuré pour attribuer à chaque signal sonore un niveau de priorité et pour diffuser via les haut-parleurs 38 prioritairement les signaux sonores ayant le niveau de priorité le plus élevé. Le niveau de priorité est, par exemple, déterminé en fonction de l'impact potentiel du message associé pour la sécurité des passagers.

Chaque dispositif de réception 36 est associé à un seul groupe de haut-parleur 32 parmi les groupes de haut-parleurs 32.

Chaque dispositif de réception 36 comprend une antenne 40. Chaque dispositif de réception 36 est propre à recevoir un signal de commande d'un dispositif de commande 42 extérieur au véhicule 10, via l'antenne 40.

Le dispositif de commande 42 est avantageusement une télécommande.

La télécommande comprend un bouton propre à permettre l'envoi d'un signal au dispositif de réception 36.

La télécommande est configurée pour communiquer avec le dispositif de réception 36 par ondes radioélectriques et/ou par signaux infrarouges.

La télécommande est avantageusement conforme à la norme NF S 32-002. Cette norme est également utilisée pour dimensionner les télécommandes permettant aux personnes malvoyantes de demander le passage au vert des feux de passage piéton. Une telle télécommande est ainsi avantageusement utilisable pour les personnes malvoyantes pour les passages piétons et pour l'orientation près d'un véhicule ferroviaire 10.

En variante, le dispositif de commande 42 est un terminal mobile de télécommunication telle qu'un téléphone portable ou une tablette numérique.

Le terminal mobile comprend une application configurée pour permettre l'envoi d'un signal au dispositif de réception 36.

Le terminal mobile est configuré pour communiquer avec le dispositif de réception 36 par ondes électromagnétiques, par exemple suivant un protocole Wifi^{®} ou Bluetooth^{®}. Ces protocoles sont bien connus de l'homme du métier.

Le dispositif de réception 36 est configuré pour transmettre le signal de commande au dispositif de contrôle 34 en cas de réception par le dispositif de réception 36 dudit signal de commande.

Dans un mode de réalisation préféré, le dispositif de réception 36 est uniquement propre à effectuer une simple transmission du signal de commande et n'effectue aucun traitement en dehors de celui associé à la transmission, ni amplification de ce signal de commande. Le dispositif de réception 36 est un simple dispositif d'entrée/sortie configuré pour transmettre le signal de commande qu'il reçoit.

Le dispositif de contrôle 34 est configuré, à réception d'un signal de commande par un dispositif de réception 36, pour la diffusion d'un signal sonore spécifique uniquement via le ou les groupes de haut-parleurs 32 associés audit dispositif de réception 36 ayant reçu le signal de commande.

Le signal sonore spécifique est avantageusement un message comprenant au moins une information spécifique sur la voiture 12 dans laquelle le dispositif de réception 36 est installé. Une information spécifique sur la voiture 12 est par exemple le numéro de la voiture 12, la destination de la voiture 12 et/ou la classe de la voiture (1^{ère} classe ou 2^{ème} classe). Le message comprend en complément facultatif une information sur le véhicule 10, les destinations desservies par le véhicule 10 et/ou l'heure de départ du véhicule 10.

Dans un mode de réalisation avantageux, au moins un groupe de haut-parleurs 32 et au moins un dispositif de réception 36 associés sont disposés dans chaque voiture 12.

Avantageusement, dans chaque voiture 12, au moins un groupe de haut-parleurs 32 et au moins un dispositif de réception 36 est associé à chaque porte latérale 18 de ladite voiture 12.

Chaque dispositif de réception 36 et le groupe associé de haut-parleurs 32 sont disposés dans une même voiture 12.

Au moins l'un des haut-parleurs 38 dudit groupe de haut-parleurs 32 est disposé à une distance inférieure à 1 m de l'une des portes d'accès 18 de la voiture 12 associée.

Ledit haut-parleur 38 est orienté de manière à être entendu par une personne située à l'extérieur de la voiture 12.

Dans un exemple de réalisation, au moins l'un des haut-parleurs 38 dudit groupe de haut-parleurs 32 est disposé sur une surface extérieure de la voiture 12 associée. En variante ou en complément, au moins l'un des haut-parleurs 38 dudit groupe de haut-parleurs 32 est disposé au niveau de l'une des plateformes 30 de la voiture 12 associée.

Lorsque chaque dispositif de réception 36 et le groupe associé de haut-parleurs 32 sont disposés dans une unique voiture 12, le signal sonore spécifique est un message comprenant au moins une information propre à différencier ladite voiture 12 des autres voitures 12.

Le dispositif de contrôle 34 et chaque dispositif de réception 36 sont typiquement réalisés sous la forme de logiciels stockés dans au moins une mémoire (non représentée) et aptes à être exécutés par au moins un processeur (non représenté) associé à ladite mémoire, la mémoire et le processeur formant ensemble une unité de traitement d'informations incluse dans le véhicule 10. En variante, le dispositif de contrôle 34 et chaque dispositif de réception 36 sont réalisés sous la forme d'un composant logique programmable ou sous la forme d'un circuit intégré dédié inclus dans le véhicule 10.

Un procédé de diffusion de signaux sonores dans le véhicule ferroviaire 10 mis en oeuvre par le système de diffusion sonore 14 va maintenant être décrit.

Initialement, le véhicule 10 est à l'arrêt, au niveau d'un quai 44 de gare.

Un passager, par exemple une personne malvoyante, se présente sur le quai 44 et désire monter à bord de l'une des voitures 12, par exemple dans laquelle un siège 31 lui est réservé.

La personne malvoyante avance sur le quai 44 et se situe à proximité de l'une des voitures 12 du véhicule 10.

Le procédé comprend alors une étape de réception par l'un des dispositifs de réception 36 d'un signal de commande envoyé par un dispositif de commande 42 extérieur au véhicule ferroviaire 10.

En particulier, le signal de commande est envoyé via le dispositif de commande 42 par la personne malvoyante présente sur le quai de gare et désirant trouver sa place dans le véhicule 10.

Suite à la réception du signal de commande, le dispositif de réception 36 transmet le signal de commande au dispositif de contrôle 34.

Puis, le procédé comprend une étape de diffusion par le dispositif de contrôle 34, uniquement via le ou les groupes de haut-parleurs 32 associés au dispositif de réception 36 ayant transmis le signal de commande, d'un signal sonore spécifique.

Le signal sonore spécifique est un message comprenant au moins une information propre à différencier la voiture 12, associée audit dispositif de réception 36, des autres voitures 12.

Le signal sonore spécifique est diffusé au moins via un haut-parleur 38 disposé à une distance inférieure à 1 m de la porte d'accès 18 de ladite voiture 12.

Ainsi, la personne malvoyante se repère par rapport au véhicule 10. Si ladite voiture 12 est la voiture 12 dans laquelle la personne malvoyante désire entrer, la personne malvoyante repère ainsi facilement la porte d'accès 18 à cette voiture 12 et peut entrer facilement dans la voiture 12.

Si ladite voiture 12 n'est pas la voiture 12 désirée, la personne malvoyante continue de se déplacer sur le quai.

Le procédé de diffusion de signaux sonores comprend alors avantageusement au moins une deuxième itération de l'ensemble des étapes décrites précédemment lorsque la personne malvoyante renvoie un signal de commande près d'une autre voiture 12 du véhicule 10.

Le procédé de diffusion de signaux sonores comprend autant d'itérations des étapes précédentes que nécessaire jusqu'à ce que la personne malvoyante trouve la voiture 12 qu'elle désire.

On conçoit alors que la présente invention présente un certain nombre d'avantages.

En effet, l'invention permet une communication améliorée avec les voyageurs, particulièrement avec les personnes malvoyantes.

En particulier, la diffusion d'un signal sonore spécifique comprenant au moins une information sur la voiture 12 associée permet à la personne malvoyante de se repérer facilement sur le quai 44 et de monter dans la voiture 12 désirée.

Le système de diffusion 34 selon l'invention présente une structure simple et intégrée dans le système de communication général du véhicule 10. Ainsi, il n'est pas nécessaire d'installer des haut-parleurs spécifiques pour l'information des personnes malvoyantes.

Ainsi, la maintenance d'un tel système est facilitée. De plus, le système de diffusion 34 selon l'invention est fiable et robuste.

Enfin, le système de diffusion 34 est propre à communiquer avec des dispositifs de réception 36 usuellement possédés par les personnes malvoyantes tels qu'une télécommande ou un téléphone portable.

L'invention n'est pas limitée aux modes de réalisation illustrés.

Dans l'exemple de réalisation illustré, les portes d'accès 18 sont situées aux extrémités des voitures 12. Bien entendu, en variante, une porte d'accès 18 peut être disposée différemment, par exemple longitudinalement au milieu de la voiture 12.

Dans l'exemple de réalisation illustré, les voitures 12 sont des voitures à un étage. L'invention s'applique aussi à un véhicule ferroviaire comprenant une ou plusieurs voiture(s) à un étage et/ou une ou plusieurs voiture(s) à deux étages, un compartiment voyageur étant prévu à chaque étage de chaque voiture à deux étages.

## Revendications

1. Véhicule ferroviaire (10), comprenant une pluralité de voitures (12) de transport de voyageurs et un système de diffusion sonore (14) embarqué dans le véhicule ferroviaire (10), le système de diffusion sonore (14) comprenant :
- une pluralité de groupes de haut-parleurs (32) répartis dans les voitures (12), chaque groupe de haut-parleurs (32) comprenant au moins un haut-parleur (38) et étant situé dans une zone de diffusion respective du véhicule ferroviaire (10) ;
- un dispositif de contrôle (34) des haut-parleurs (38), le dispositif de contrôle (34) étant configuré pour la diffusion de signaux sonores génériques via les haut-parleurs (38) des différents groupes de haut-parleurs (32) ; et
- une pluralité de dispositifs de réception (36), chaque dispositif de réception (36) étant associé à un seul groupe de haut-parleur (32) parmi les groupes de haut-parleurs (32), chaque dispositif de réception (36) étant propre à recevoir un signal de commande d'un dispositif de commande (42) extérieur au véhicule ferroviaire (10), le dispositif de contrôle (34) étant configuré, à réception d'un signal de commande par l'un des dispositifs de réception (36), pour la diffusion d'un signal sonore spécifique uniquement via le groupe de haut-parleurs (32) associé audit dispositif de réception (36) ayant reçu le signal de commande,
chaque dispositif de réception (36) et le groupe de haut-parleurs (32) associé étant disposés dans une même voiture (12), le signal sonore spécifique étant un message comprenant au moins une information propre à différencier ladite voiture (12) des autres voitures (12),
chaque dispositif de réception (36) et le groupe de haut-parleurs (32) associé étant disposés dans une voiture (12) de transport de voyageurs comprenant une porte d'accès (18), au moins un haut-parleur (38) dudit groupe de haut-parleurs (32) étant disposé à une distance inférieure à 1 m de la porte d'accès (18).

2. Véhicule ferroviaire (10) selon la revendication 1, dans lequel le système de diffusion sonore comprend au moins un groupe de haut-parleurs (32) et au moins un dispositif de réception (36) associé au niveau de chaque zone du véhicule ferroviaire muni d'au moins une porte latérale (18) et destinée à l'embarquement de passagers.

3. Véhicule ferroviaire (10) selon la revendication 3, dans lequel au moins un haut-parleur dudit groupe de haut-parleurs est disposé sur une surface extérieure de la voiture associée.

4. Véhicule ferroviaire (10) selon l'une quelconque des revendications précédentes, dans lequel le dispositif de commande (42) est choisi parmi le groupe constitué de :
- une télécommande configurée pour communiquer avec le dispositif de réception (36) par ondes radioélectriques et/ou par signaux infrarouges ; et
- un terminal mobile de télécommunication configuré pour communiquer avec le dispositif de réception (36) par ondes électromagnétiques, par exemple suivant un protocole Wifi^{®} ou Bluetooth^{®}.

5. Procédé de diffusion de signaux sonores dans un véhicule ferroviaire (10) selon la revendication 1 mis en oeuvre par un système de diffusion sonore (14) embarqué dans le véhicule ferroviaire (10); le procédé de diffusion comprenant les étapes suivantes :
- réception par un des dispositifs de réception (36) d'un signal de commande envoyé par un dispositif de commande (42) extérieur au véhicule ferroviaire (10) ;
- transmission par ledit dispositif de réception (36) du signal de commande au dispositif de contrôle (34) ;
- diffusion par le dispositif de contrôle (34), uniquement via le groupe de haut-parleurs (32) associé au dispositif de réception (36) ayant transmis le signal de commande, d'un signal sonore spécifique, le signal sonore spécifique étant un message comprenant au moins une information propre à différencier ladite voiture (12) des autres voitures (12).

6. Programme d'ordinateur comportant des instructions logicielles qui, lorsqu'elles sont exécutées par une unité de traitement d'informations appartenant au véhicule (10) selon la revendication 1, mettent en oeuvre un procédé de diffusion selon la revendication 5.

## Patentansprüche

1. Schienenfahrzeug (10), das eine Vielzahl von Wagen (12) zur Beförderung von Fahrgästen und ein in dem Schienenfahrzeug (10) mitgeführtes Tonübertragungssystem (14) umfasst, wobei das Tonübertragungssystem (14) Folgendes enthält:
- eine Vielzahl von Lautsprechergruppen (32), die in den Wagen (12) verteilt sind, wobei jede Lautsprechergruppe (32) mindestens einen Lautsprecher (38) umfasst und sich in einem jeweiligen Sendebereich des Schienenfahrzeugs (10) befindet;
- eine Steuervorrichtung (34) für die Lautsprecher (38), wobei die Steuervorrichtung (34) so konfiguriert ist, dass sie generische Tonsignale über die Lautsprecher (38) der verschiedenen Gruppen von Lautsprechern (32) ausstrahlt; und
- eine Vielzahl von Empfangsvorrichtungen (36), wobei jede Empfangsvorrichtung (36) einer einzelnen Lautsprechergruppe (32) der Lautsprechergruppen (32) zugeordnet ist, wobei jede Empfangsvorrichtung (36) geeignet ist, ein Steuersignal von einer Steuereinrichtung (42) außerhalb des Schienenfahrzeugs (10) zu empfangen, wobei die Steuervorrichtung (34) bei Empfang eines Steuersignals durch eine der Empfangsvorrichtungen (36) so konfiguriert ist, dass sie ein spezifisches Tonsignal nur über die Lautsprechergruppe (32) ausgibt, die der Empfangsvorrichtung (36) zugeordnet ist, die das Steuersignal empfangen hat,
wobei jede Empfangsvorrichtung (36) und die zugehörige Lautsprechergruppe (32) in demselben Wagen (12) angeordnet sind, wobei das spezifische Tonsignal eine Nachricht ist, die mindestens eine Information umfasst, die geeignet ist, den Wagen (12) von anderen Wagen (12) zu unterscheiden,
wobei jede Empfangsvorrichtung (36) und die zugehörige Lautsprechergruppe (32) in einem Personenbeförderungswagen (12) mit einer Einstiegstür (18) angeordnet sind, wobei mindestens ein Lautsprecher (38) der Lautsprechergruppe (32) in einem Abstand von weniger als 1 m von der Einstiegstür (18) angeordnet ist.

2. Schienenfahrzeug (10) nach Anspruch 1, wobei das Tonübertragungssystem mindestens eine Gruppe von Lautsprechern (32) und mindestens eine Empfangseinrichtung (36) umfasst, die jedem Bereich des Schienenfahrzeugs zugeordnet ist, der mit mindestens einer Seitentür (18) versehen und für das Einsteigen von Fahrgästen bestimmt ist.

3. Schienenfahrzeug (10) nach Anspruch 3, wobei mindestens ein Lautsprecher der Lautsprechergruppe an einer Außenfläche des zugehörigen Wagens angeordnet ist.

4. Schienenfahrzeug (10) nach einem der vorherigen Ansprüche, wobei die Steuereinrichtung (42) aus einer Gruppe gewählt wird, die Folgendes enthält.
- eine Fernbedienung, die so konfiguriert ist, dass sie mit der Empfangsvorrichtung (36) über Funkwellen und/oder Infrarotsignale kommuniziert; und
- ein mobiles Telekommunikationsendgerät, das so konfiguriert ist, dass es mit der Empfangsvorrichtung (36) über elektromagnetische Wellen kommuniziert, zum Beispiel nach einem Wifi^{®}- oder Bluetooth^{®}-Protokoll.

5. Sendeverfahren von Tonsignalen in einem Schienenfahrzeug (10) nach Anspruch 1, das durch ein im Schienenfahrzeug (10) mitgeführtes Tonübertragungssystem (14) durchgeführt wird;
wobei das Sendeverfahren die folgenden Schritte umfasst:
- Empfangen durch eine der Empfangsvorrichtungen (36) eines Steuersignals, das von einer Steuereinrichtung (42) außerhalb des Schienenfahrzeugs (10) gesendet wird;
- Übertragung des Steuersignals durch die Empfangsvorrichtung (36) an die Steuervorrichtung (34);
- Ausstrahlung eines spezifischen Tonsignals durch die Steuervorrichtung (34), nur über die Lautsprechergruppe (32), die der Empfangsvorrichtung (36) zugeordnet ist, die das Steuersignal übertragen hat, wobei das spezifische Tonsignal eine Nachricht ist, die mindestens eine Information umfasst, die geeignet ist, den Wagen (12) von anderen Wagen (12) zu unterscheiden.

6. Computerprogramm mit Softwarebefehlen, die, wenn sie von einer zum Fahrzeug (10) gehörenden Informationsverarbeitungseinheit nach Anspruch 1 ausgeführt werden, ein Sendeverfahren nach Anspruch 5 ausführen.

## Claims

1. A railway vehicle (10) comprising a plurality of passenger transport cars (12), and a sound diffusion system (14) embedded in the railway vehicle (10), the sound diffusion system (14) comprising:
- a plurality of groups of speakers (32) distributed in the plurality of cars (12), each group of speakers (32) comprising at least one speaker (38) and being located in a respective diffusion zone of the railway vehicle (10);
- a control device (34) of the speakers (38), the control device (34) being configured to broadcast generic sound signals via the speakers (38) of the different groups of speakers (32); and
- a plurality of reception devices (36), each reception device (36) being associated with a single group of speakers (32) among the groups of speakers (32), each reception device (36) being able to receive a control signal from a control device (42) outside the railway vehicle (10), the control device (34) being configured, upon reception of a control signal by one of the reception devices (36), to broadcast a specific sound signal solely via the group of speakers (32) associated with said reception device (36) having received the control signal,
wherein each reception device (36) and the associated group of speakers (32) are arranged in a same car (12) among the plurality of cars (12), the specific sound signal being a message comprising at least one information item able to differentiate said car (12) from the other cars (12) from the plurality of cars (12),
each reception device (36) and the associated group of speakers (32) being arranged in a passenger transport car (12) comprising an access door (18), at least one speaker (38) of the group of speakers (32) being arranged at a distance inferior to 1 m of the access door (18).

2. The railway vehicle (10) according to claim 1, wherein the sound diffusion system comprises at least one group of speakers (32) and at least one reception device (36) associated at each area of the railway vehicle provided with at least one side door (18) and intended for passenger boarding.

3. The sound diffusion system (14) according to claim 3, wherein at least one speaker from said group of speakers is arranged on an outer surface of the associated car.

4. The sound diffusion system (14) according to any one of the preceding claims, wherein the control device (42) is chosen from the group made up of:
- a remote control configured to communicate with the reception device (36) by radio waves and/or by infrared signals; and
- a mobile telecommunication terminal configured to communicate with the reception device (36) by electromagnetic waves, for example according to a Wifi^{®} or Bluetooth^{®} protocol.

5. A diffusion method for sound signals in a railway vehicle (10) according to claim 1, implemented by a sound diffusion system (14), embedded in the railway vehicle (10), the diffusion method comprising the following steps:
- reception by one of the reception devices (36) of a control signal sent by a control device (42) outside the railway vehicle (10);
- transmission by said reception device (36) of the control signal to the control device (34);
- diffusion by the control device (34), solely via the group of speakers (32) associated with the reception device (36) having transmitted the control signal, of a specific sound signal, the specific sound signal being a message comprising at least one information item able to differentiate said car (12) from the other cars (12) from the plurality of cars (12).

6. A computer program comprising software instructions which, when executed by a computer belonging to the railway vehicle (10) according to claim 1, carry out a diffusion method according to claim 5.
